Europäisches Patentamt

**European Patent Office**

Office européen des brevets

(19)

(11) Numéro de publication : **0 155 209 B1**

(12) **FASCICULE DE BREVET EUROPÉEN**

(45) Date de publication du fascicule du brevet :
27.07.88

(21) Numéro de dépôt : 85400312.6

(22) Date de dépôt : 21.02.85

(51) Int. Cl.⁴ : **F 16 F 3/08**, F 16 F 15/08,
B 61 F 5/04, B 61 F 5/12,
B 61 F 5/08, B 61 F 5/10

(54) Dispositif d'appui elastique.

(30) Priorité : 24.02.84 FR 8402810

(43) Date de publication de la demande :
18.09.85 Bulletin 85/38

(45) Mention de la délivrance du brevet :
27.07.88 Bulletin 88/30

(84) Etats contractants désignés :
BE DE FR GB IT

(56) Documents cités :
FR-A- 2 354 229
FR-A- 2 363 469
US-A- 2 573 108

(73) Titulaire : SOCIETE M T E Société anonyme
32, Quai de Dion Bouton
F-92800 Puteaux (FR)

(72) Inventeur : Gaudiau, Gaston
4, rue des Iris
F-71200 Le Creusot (FR)

(74) Mandataire : Weinmiller, Jürgen et al
Lennéstrasse 9 Postfach 24
D-8133 Feldafing (DE)

EP 0 155 209 B1

Jouve, 18, rue St-Denis, 75001 Paris, France

## Description

La présente invention se rapporte à un dispositif d'appui élastique comportant un anneau élastique en élastomère dans lequel sont disposés des anneaux intercalaires rigides qui adhèrent à l'élastomère, l'anneau élastique présentant ainsi une structure feuilletée dans le sens axial, et pouvant en particulier être monté en série avec un ressort hélicoïdal, notamment dans une suspension secondaire de bogie ferroviaire.

Il a été proposé dans le document FR-A-2 354 229 un dispositif d'appui élastique pour suspension secondaire de bogie ferroviaire comprenant deux ressorts en élastomère avec anneaux intercalaires rigides, un ressort tronconique et un ressort cylindrique creux, fixé à l'armature extérieure du ressort tronconique, lequel peut pénétrer en charge à l'intérieur du ressort cylindrique annulaire. Un tel dispositif est un peu complexe et ne permet pas d'obtenir une rigidité à la déflection horizontale progressivement croissante en fonction de l'effort radial, pour une charge axiale donnée.

La présente invention a pour but de procurer un dispositif d'appui élastique assurant une rigidité à la déflection horizontale faible pour de faibles efforts radiaux, puis de plus en plus élevée quand l'effort radial croît.

Le dispositif selon l'invention est caractérisé par le fait qu'il comporte, au centre de l'alésage de l'anneau en élastomère, une butée centrale coaxiale, dont la surface extérieure est séparée, en l'absence de sollicitation de l'anneau, de la surface en élastomère de l'alésage de l'anneau et est susceptible d'entrer progressivement en contact avec ladite surface en élastomère de l'alésage, qui se déforme lorsque l'anneau est soumis à une sollicitation croissante dans une direction radiale.

Selon une caractéristique, la surface extérieure de la butée centrale est en élastomère.

Selon une caractéristique, la surface extérieure de la butée centrale a une forme générale tronconique, l'alésage de l'anneau ayant une forme générale cylindrique.

Selon une autre caractéristique, la surface extérieure de la butée est conformée de manière à former avec l'alésage de l'anneau un espace annulaire dont la section radiale augmente de la base de la butée vers son autre extrémité.

Selon une autre caractéristique, la butée centrale est formée par un coussin en élastomère adhérisé à l'extérieur d'un mandrin.

Selon une autre caractéristique, la surface extérieure en élastomère de la butée et la surface de l'alésage de l'anneau forment des ondes de révolution autour de l'axe de l'anneau.

Selon une autre caractéristique, les anneaux intercalaires situés à la hauteur de la butée centrale présentent chacun un alésage dont le diamètre est supérieur au diamètre de l'alésage de l'anneau de manière que ledit alésage soit noyé dans la masse d'élastomère.

L'invention va maintenant être décrite avec plus de détails en se référant à des modes de réalisation donnés à titre d'exemples et représentés par les dessins annexés sur lesquels :

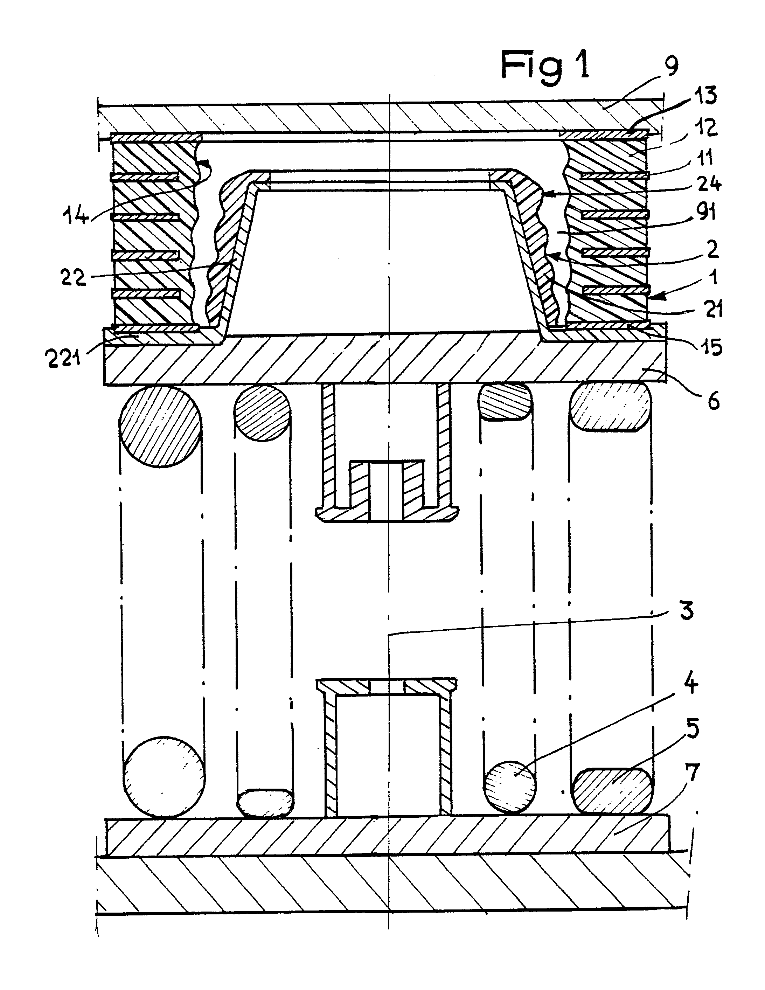

La figure 1 représente une coupe axiale d'un mode de réalisation du dispositif selon l'invention.

La figure 2 est une variante de la figure 1.

La figure 3 est un diagramme donnant la déflection horizontale en fonction de l'effort horizontal appliqué au dispositif.

En se référant aux figures, le dispositif comporte un anneau élastique 1 en élastomère présentant une structure feuilletée ou sandwich. Il est monté en série avec des ressorts hélicoïdaux 4, 5. La charge s'appuie par l'intermédiaire d'une plaque d'appui 9 sur l'anneau 1. L'anneau en élastomère 1 et les ressorts hélicoïdaux sont centrés sur un même axe vertical 3 selon lequel s'exerce une charge axiale de compression. L'anneau 1 s'appuie sur les ressorts 4 et 5 par l'intermédiaire d'une coupelle d'appui supérieure 6. Les ressorts hélicoïdaux s'appuient sur une coupelle d'appui inférieure 7.

L'anneau en élastomère 1 présente des sections droites terminales qui sont adhérées à deux armatures rigides 13 et 15. L'armature supérieure 13 est solidaire de la plaque d'appui 9 par exemple d'une caisse ferroviaire. L'armature inférieure 15 est centrée de manière à être immobilisée horizontalement sur la coupelle supérieure 6. L'anneau comporte des anneaux métalliques intercalaires 11 qui s'étendent horizontalement à différentes hauteurs dans l'épaisseur de l'élastomère. Ces anneaux intercalaires 11 sont de préférence disposés à des intervalles sensiblement égaux entre les armatures terminales et ils sont adhérés à l'élastomère 12. La surface 14 de l'alésage de l'anneau est en élastomère et a une forme générale cylindrique.

Le dispositif présente, au centre de l'alésage de l'anneau 1, une butée centrale 2 dont la surface extérieure 24 est séparée par une distance non nulle et finie de la surface 14 de l'alésage de l'anneau 1. La distance mesurée horizontalement augmente de bas en haut de manière que la déflection maximum soit du côté supérieur.

La butée centrale 2 est formée par un coussin en élastomère 21 adhérisé à la surface extérieure d'un mandrin métallique central 22. Ce mandrin présente une partie centrale de révolution (cylindrique ou tronconique) sur laquelle est adhérisé le coussin. Cette partie est solidaire d'un collet annulaire 221 qui est immobilisé sur la coupelle d'appui supérieure 6. L'armature inférieure 15 de l'anneau 1 est centrée de manière à être immobilisée horizontalement sur le dessus du collet 221. Le coussin 21 a la forme d'un manchon qui enveloppe le mandrin 22. La surface extérieure 24 du coussin 21 est conformée de manière à former avec l'alésage cylindrique de l'anneau un espace annulaire dont la section horizontale augmente de bas en haut. Les anneaux intercalaires 11 situés à la hauteur de la butée centrale 2 présentent chacun un alésage dont le diamètre est supérieur au diamètre de l'alésage de l'anneau de manière que les alésages des anneaux considérés soient noyés dans la masse de l'élastomère.

La surface extérieure 24 de la butée centrale 2 et la surface 14 de l'alésage de l'anneau 1 forment des ondes de révolution autour de l'axe 3.

La hauteur de la butée centrale 2 est inférieure à la hauteur de l'anneau 1. Le coussin en élastomère 21 forme un tampon à la partie supérieure de la butée de manière à constituer une butée élastique axiale.

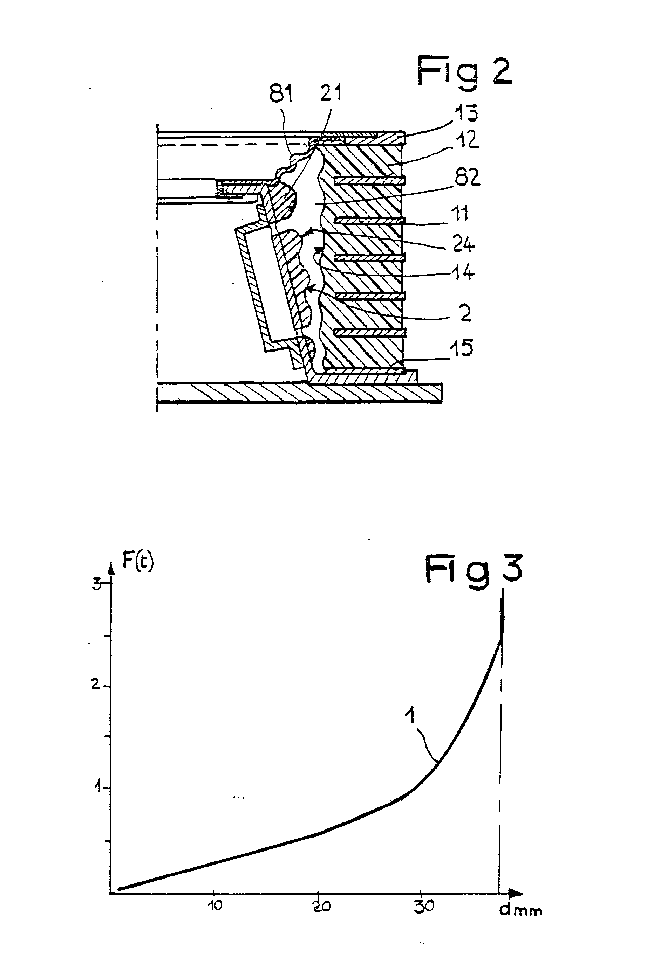

Dans le mode de réalisation de la figure 2, une membrane annulaire 81 ferme l'espace entre la butée 1 et l'anneau 2 de manière à former une chambre 82. Cette chambre 82 contient un fluide.

Le fonctionnement du dispositif va maintenant être expliqué.

Sous l'effet d'une sollicitation horizontale, l'anneau 1 se déforme et la surface en élastomère de l'alésage 14 vient progressivement en contact avec la surface en élastomère 24 de la butée. Plus la sollicitation horizontale augmente plus la surface de contact entre 14 et 24 augmente, la déflection étant maximum à la partie supérieure. La figure 3 donne la variation de la déflection horizontale en fonction de l'effort horizontal pour l'ensemble constitué par les ressorts hélicoïdaux, l'anneau et la butée (courbe 1).

Il est bien entendu que l'on peut, sans sortir du cadre de l'invention, imaginer des variantes et des perfectionnements de détail et de même envisager l'emploi de moyens équivalents. L'anneau 1 et la butée centrale 2 peuvent être moulés ensemble ou séparément. L'élastomère de l'anneau pourrait être adhérisé directement sur la coupelle supérieure du ressort ou sur le collet 221. La portée extérieure de la butée pourrait être en polyamide ou en une autre matière plastique.

**Revendications**

1. Dispositif d'appui élastique comportant un anneau élastique (1) en élastomère dans lequel sont disposés des anneaux intercalaires rigides (11) qui adhèrent à l'élastomère (12), l'anneau élastique (1) présentant ainsi une structure feuilletée dans le sens axial, caractérisé par le fait qu'il comporte, au centre de l'alésage (14) de l'anneau en élastomère (1), une butée centrale coaxiale (2), dont la surface extérieure (24) est séparée, en l'absence de sollicitation de l'anneau (1), de la surface en élastomère de l'alésage (14) de l'anneau (1) et est susceptible d'entrer progressivement en contact avec ladite surface en élastomère de l'alésage (14), qui se déforme lorsque l'anneau (1) est soumis à une sollicitation croissante dans une direction radiale.

2. Dispositif selon la revendication 1, caractérisé par le fait que la surface extérieure de la butée est en élastomère.

3. Dispositif selon l'une quelconque des revendications précédentes, caractérisé par le fait que la surface extérieure (24) de la butée a une forme générale tronconique, l'alésage de l'anneau ayant une forme générale cylindrique.

4. Dispositif selon l'une quelconque des revendications précédentes, caractérisé par le fait que la surface extérieure (24) de la butée est conformée de manière à former avec l'alésage (14) de l'anneau un espace annulaire dont la section radiale augmente de la base de la butée vers son autre extrémité.

5. Dispositif selon l'une quelconque des revendications précédentes, caractérisé par le fait que la butée centrale (2) est formée par un coussin (21) en élastomère adhérisé à l'extérieur d'un mandrin (22).

6. Dispositif selon l'une quelconque des revendications 3 à 5, caractérisé par le fait que le mandrin (22) forme un collet annulaire (221) sur lequel est centrée l'armature terminale de l'anneau proche de la grande base de la surface extérieure de la butée.

7. Dispositif selon l'une quelconque des revendications précédentes, caractérisé par le fait que la surface extérieure (24) de la butée centrale et la surface (14) de l'alésage de l'anneau forment des ondes de révolution autour de l'axe (3) de l'anneau (1).

8. Dispositif selon l'une quelconque des revendications précédentes, caractérisé par le fait que les anneaux intercalaires (11) situés à la hauteur de la butée centrale (2) présentent chacun un alésage dont le diamètre est supérieur au diamètre de l'alésage (14) de l'anneau, de manière que lesdits alésages des anneaux intercalaires soient noyés dans la masse de l'élastomère (12).

9. Dispositif selon l'une quelconque des revendications précédentes, caractérisé par le fait qu'il présente une membrane annulaire (81) fermant l'espace compris entre la surface extérieure (24) de la butée et la surface (14) de l'alésage de l'anneau de manière à former une chambre (82) contenant un fluide.

10. Dispositif selon l'une quelconque des revendications précédentes, caractérisé par le fait que l'anneau (1) est monté en série avec au moins un ressort hélicoïdal (4, 5).

**Claims**

1. A resilient support device comprising a resilient ring (1) made of an elastomer, in which are disposed rigid interposed rings (11) adhering to the elastomer (12), so that the elastic ring (1) shows a laminated structure in the axial direction, characterized in that it comprises, in the centre of the bore (14) of the elastomer ring (1), a central coaxial stop (2), the outer surface (24) of which is separated, in the absence of forces impacting upon the ring (1), from the elastomer surface of the bore (14) of the ring (1), and which is adapted for entering progressively into contact with said elastomer surface of the bore (14) which is deformed when the ring (1) is subjected to increasing horizontal forces in the axial direction.

2. A device according to claim 1, characterized in that the outer surface of the central stop is made of an elastomer.

3. A device according to any one of the preceding claims, characterized in that the outer surface (24) of the central stop has a truncated overall shape, the bore of the ring having a cylindrical overall shape.

4. A device according to any one of the preceding claims, characterized in that the outer surface (24) of the stop is adaptively formed so as to constitute with the bore (14) of the ring an annular space, the radial cross-section of which increases beginning at the bottom of the stop up to the other end.   .

5. A device according to any one of the preceding claims, characterized in that the central stop (2) is formed by a cushion (21) of elastomer adhering to the outside of a chuck (22).

6. A device according to any one of claims 3 to 5, characterized in that the chuck (22) has the shape of an annular collar (221) upon which is centered the terminal armature of the ring close to the great base of the outer surface of the stop.

7. A device according to any one of the preceding claims, characterized in that the outer surface (24) of the stop and the surface (14) of the bore of the ring form revolution-type waves surrounding the axis (3) of the ring (1).

8. A device according to any one of the preceding claims, characterized in that each of the interposed rings (11) located aside the central stop (2) has a bore whose diameter is greater than the diameter of the bore (14) of the ring so that said bore is buried within the bulk of the elastomer (12).

9. A device according to any one of the preceding claims, characterized in that it is provided with an annular membrane (81) closing the volume comprised between the outer surface (24) of the stop and the surface (14) of the bore of the ring, so as to constitute a chamber (82) containing a fluid.

10. A device according to any one of the preceding claims, characterized in that the ring (1) is mounted in series with at least one helical spring (4, 5).

**Patentansprüche**

1. Elastische Abstützvorrichtung mit einem elastischen Elastomerring (1), in welchem steife, am Elastomer (12) haftende Zwischenringe (11) angeordnet sind, wodurch der elastische Ring (1) eine in Achsrichtung geschichtete Struktur erhält, dadurch gekennzeichnet, daß sie in der Mitte der Bohrung (14) des Elastomerrings (1) einen koaxialen, zentralen Anschlag (2) aufweist, dessen äußere Oberfläche (24) bei fehlender Belastung des Ringes (1) von der Elastomeroberfläche der Bohrung (14) des Ringes (1) getrennt ist, aber zunehmend in Berührung mit der Elastomeroberfläche der Bohrung (14) tritt, die sich verformt, wenn der Ring (1) einer wachsenden Belastung in radialer Richtung unterliegt.

2. Vorrichtung nach Anspruch 1, dadurch gekennzeichnet, daß die äußere Oberfläche des Anschlages aus Elastomer besteht.

3. Vorrichtung nach einem der vorhergehenden Ansprüche, dadurch gekennzeichnet, daß die äußere Oberfläche (24) des Anschlages die allgemeine Form eines Kegelstumpfes besitzt, während die Bohrung des Ringes eine insgesamt allgemein zylindrische Form aufweist.

4. Vorrichtung nach einem der vorhergehenden Ansprüche, dadurch gekennzeichnet, daß die äußere Oberfläche (24) des Anschlages so gestaltet ist, daß sie mit der Bohrung (14) des Ringes einen Ringraum bildet, dessen radialer Querschnitt vom Fuß des Anschlages zum anderen Ende hin zunimmt.

5. Vorrichtung nach einem der vorhergehenden Ansprüche, dadurch gekennzeichnet, daß der zentrale Anschlag (2) aus einem Elastomerkissen (21) besteht, das an der Außenseite eines Haltedorns (22) angeheftet ist.

6. Vorrichtung nach einem der Ansprüche 3 bis 5, dadurch gekennzeichnet, daß der Haltedorn (22) einen Ringkragen (221) bildet, auf den die nahe der großen Basis der äußeren Oberfläche des Anschlages befindliche Abschlußbewehrung mittig ausgerichtet ist.

7. Vorrichtung nach einem der vorhergehenden Ansprüche, dadurch gekennzeichnet, daß die äußere Oberfläche (24) des zentralen Anschlages und die Oberfläche (14) der Bohrung des Ringes die Gestalt von um die Achse (3) des Ringes (1) herumlaufenden Wellen besitzt.

8. Vorrichtung nach einem der vorhergehenden Ansprüche, dadurch gekennzeichnet, daß die auf der Höhe des zentralen Anschlages sitzenden Zwischenringe (11) jeweils eine Bohrung besitzen, deren Durchmesser größer als der Durchmesser der Bohrung (14) des Ringes ist, so daß die Bohrungen der Zwischenringe in die Elastomermasse (12) eingebettet sind.

9. Vorrichtung nach einem der vorhergehenden Ansprüche, dadurch gekennzeichnet, daß sie eine ringförmige Membran (81) aufweist, die einen zwischen der äußeren Oberfläche (24) des Anschlags und der Oberfläche (14) der Bohrung des Ringes befindlichen Raum abschließt, so daß eine mit Flüssigkeit gefüllte Kammer (82) entsteht.

10. Vorrichtung nach einem der vorhergehenden Ansprüche, dadurch gekennzeichnet, daß der Ring (1) mit mindestens einer Schraubenfeder (4, 5) in Reihe geschaltet ist.

# Fig 1

0 155 209

Fig 2

81  21

13
12
82
11
24
14
2
15

F(t)

3

2

1

1

10    20    30    d mm

Fig 3

2